# EUROPEAN PATENT SPECIFICATION

(11) **EP 1 372 378 B1**
(45) Date of publication and mention of the grant of the patent: **19.07.2006**
(21) Application number: 02714329.6
(22) Date of filing: 20.03.2002
(51) Int. Cl.: A01K 5/02, A01K 5/00

(54) **METHOD OF AND APPARATUS FOR FEEDING PIGS**
VERFAHREN UND VORRICHTUNG ZUR SCHWEINEFÜTTERUNG
PROCEDE ET APPAREIL PERMETTANT DE NOURRIR DES PORCS

(30) Priority: 06.04.2001 GB 0108639
(43) Date of publication of application: 02.01.2004
(73) Proprietor: G.E. Baker (U.K.) Ltd, Bury St Edmunds Suffolk IP30 9RN (GB)
(72) Inventor: HARDING, Mark, Andrew, Rattlesden Suffolk IP30 0RA (GB)
(74) Representative: Nash, Keith Wilfrid
(86) International application number: PCT/GB2002/001307
(87) International publication number: WO 2002/080660

(56) References cited:
- EP-A- 0 469 192
- EP-A- 1 004 236
- DE-A- 19 829 139
- DE-B- 1 070 440
- FR-A- 2 563 078
- US-A- 4 889 078
- US-A- 5 967 083

## Description

### Field of the Invention

This invention relates to a method of feeding pigs and to a pig feeder for carrying out said method, according to the preamble of claim 1 and claim 5. A similar method and feeding trough are already disclosed by US-A-4 889 078.

### Background to the Invention

Pig feeders are available which not only feed dry particulate feed in the form of meal, crumb or pellets, but also deliver liquid (usually water) into a trough. The purpose is to mix the liquid with the dry particulate feed and create a more palatable food for consumption by the pigs.

There is a spectrum of designs of delivery methods of the dry feed and water. These range in design from the operation of water delivery and feed delivery mechanisms being carried out separately, operable by the pig as it chooses. To designs in which the ratio of dry feed to water is precisely controlled, the mixing action being carried out by electrically driven mechanisms. This spectrum of techniques is generally reflected in the cost of the feeders from the very simple being least expensive to the completely automated being most expensive.

However in general they are all capable of either delivering stale mixed product due to retention in a remote mixing or delivery system, or leaving unmixed ingredients, especially dry material, in the trough and neither stale nor unmixed material will be eaten by the pigs.

It has been discovered that it is important that when presented to the pig the mixture is a homogenous mix of dry particulate feed to water or liquid, and that it is important that the separate ingredients of dry feed and liquid do not build up in the trough.

It is an object of the present invention to provide a method of supplying the ingredients to a feeding trough for consumption by pigs and to an improved feeding trough, which in general prevents the unwelcome build up of individual ingredients in the trough.

### Summary of the Invention

According to one aspect of the invention, there is provided a method of mixing metered amounts of liquid and dry feed whilst both migrate in a downward direction over a mixing region to a feeding region of a feeding trough.

In general it is envisaged that the liquid and dry feed will both be dispensed from above the mixing region so as to fall onto the mixing region in a generally downward manner.

Preferably the dry feed is delivered on to the mixing region in a predetermined dispersal pattern and the liquid is delivered on to the mixing region in a similar pattern.

In a preferred arrangement the liquid is delivered by means of a spray nozzle.

The resulting feed is a fresh mix as it migrates directly from the mixing region to the feeding region, in contrast to mixing at an elevated point and delivering an already mixed feed to the trough.

Conveniently the delivery of feed and water is pig driven.

Preferably means is provided for inhibiting the pig driven delivery system. Typically the inhibition is effected at intervals so that the feeding cycle of the pigs is controlled.

The intervals between inhibition and/or the duration of each inhibition may be adjustable.

The inhibiting means may work in conjunction with a probe to detect the level of feed in the trough and to prevent build up of uneaten mixed feed.

Preferably means is provided for inhibiting the delivery means. By linking the operation of the inhibiting means to a timing means, so the delivery means can be inhibited at intervals, whereby the feeding cycle of pigs can be regulated.

The timing means is preferably adjustable, whereby pigs can have access to greater quantities of feed as they grow.

The metered amounts of liquid and feed are preferably relatively adjustable in quantity.

Thus for example, where at least one volume of liquid to one volume of feed is dispensed, the result will be a mix suitable for weaned piglets.

According to another aspect of the invention, there is provided a pig feeding trough having at least one inclined surface to receive dry feed and a liquid, such as water, thereon and thereby serve as an inclined mixing platform extending in a downward direction towards a feed reservoir from which it can be eaten by the feeding livestock.

The inclined surface may be conical or frusto-conical and the reservoir conveniently is an annular channel around the base of the inclined surface.

Alternatively the trough may have a plurality of similarly inclined similar triangular or trapezoidal surfaces arranged symmetrically relative to a central axis and each extending downwardly and outwardly towards a trough, which may be formed by a corresponding plurality of interconnected segments each parallel to one of the inclined surfaces. The segments may interconnect with adjoining segments to form a continuous trough.

According to another aspect of the invention, there is provided a pig feeder having at its bottom an annular feeding region into which mixed feed and liquid is fed from an inclined generally smooth or multifaceted generally conical or frusto-conical region at the centre of a feeding trough, and means for simultaneously delivering metered amounts of liquid and dry feed on to the inclined face or faces of the generally conical or frusto-conical region, for mixing thereon as they migrate down the surface or surfaces thereof.

Preferably the delivery means delivers the liquid and feed on to the inclined face or faces of the generally smooth or multifaceted conical or frusto-conical region in the same predetermined pattern, which may be in the form of a generally circular, or square or rectangular outline.

The delivery means is preferably pig driven, as by means of a nudge bar.

### Description of Embodiment.

The invention is further described with reference to the accompanying drawings, in which:-
Fig 1 shows one embodiment of pig feeder in transparent elevation;
Fig 2 is an enlargement of the bottom portion of the feeder of Fig 1;
Fig 3 is a schematic elevation of a nudge-bar operated feed mixer/dispenser constructed as another embodiment of the invention, showing a nudge-bar engaged by the snout of a pig;
Figs 4 and 5 show in plan view the two relatively movable parts of the dispensing mechanism of Fig 3;
Fig 6 shows the two parts overlaid;
Fig 7 shows a notched disc for attachment to the rotatable part of Fig 3, for engagement by a pin to inhibit rotation;
Fig 8 is a diagrammatic transparent elevation view, and
Fig 9 is a cutaway perspective view of the lower end of the feeder shown in Figs 3 to 8.

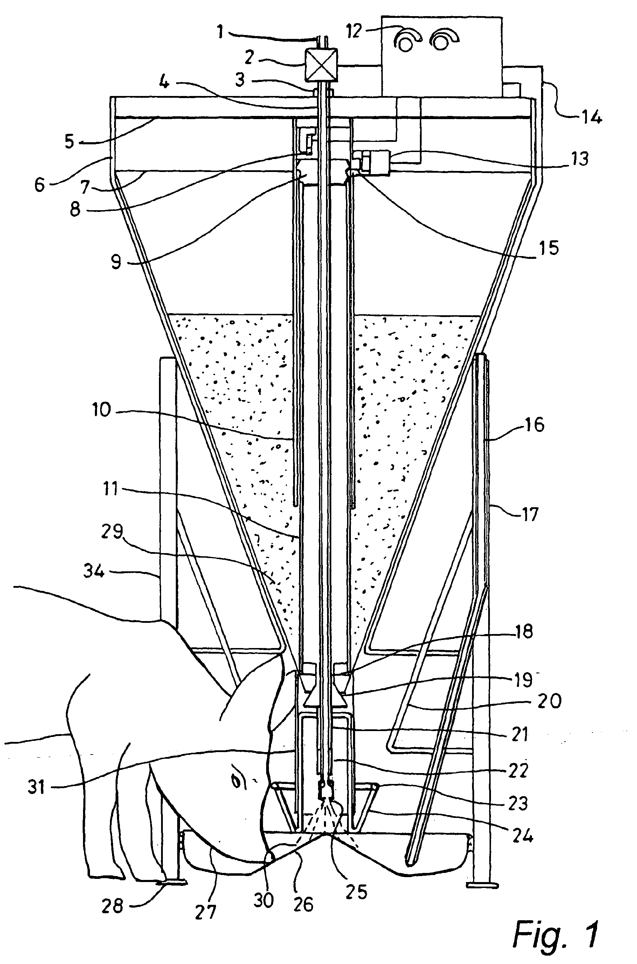

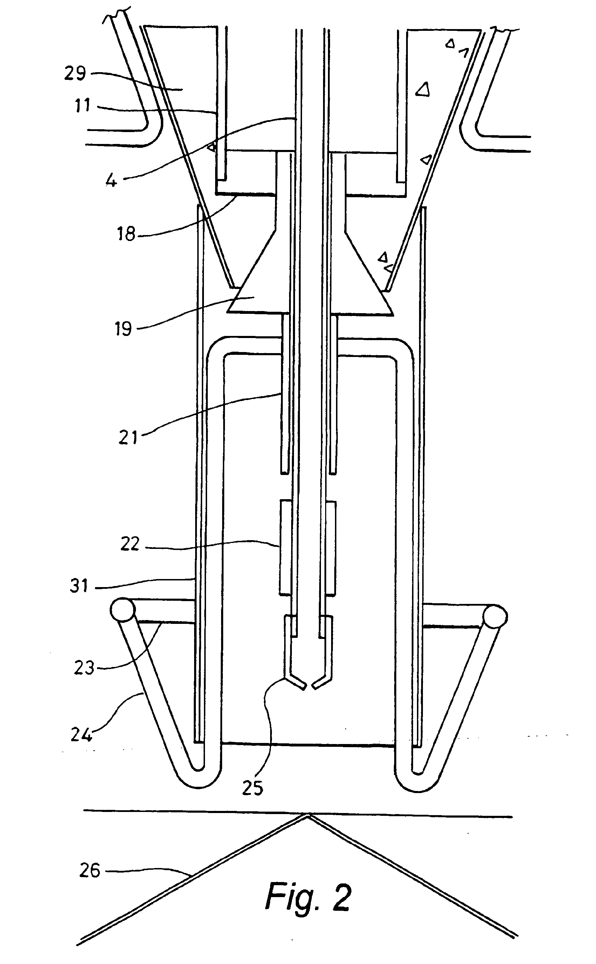

Referring to Figs 1 and 2, the following is a self-explanatory summary of the referenced parts of the pig feeder:-
1. Liquid inlet for liquid under pressure.
2. Solenoid valve electronically controlled by circuitry.
3. Water delivery tube suspension nut.
4. Water delivery tube.
5. Feed mechanism suspension cross bar.
6. Framework element.
7. Hopper for dry, particulate feed.
8. Microswitch to detect operation of mechanism. Linked to control circuitry.
9. Dispensing mechanism end stops incorporating mechanism locking catch. End stop acts directly on microswitch.
10. Dispensing mechanism shroud. Prevents frictional force being applied to dispensing mechanism by surrounding feed.
11. Dispensing mechanism baton, links dispensing chamber elements to end stop, section exposed to feed acts to agitate feed in hopper to prevent bridging by applying frictional force on surrounding particulate feed.
12. Control device adjustment knobs. Provide adjustment for feed time during feed cycle and quantity of liquid delivered per activation of dispensing mechanism.
13. Solenoid shot bolt. When the mechanism is required to be locked the shot bolt is positioned so that on operation of the mechanism by the animal, the bolt engages in the circular groove around the axis of the dispensing mechanism end cap. This prevents the mechanism from dropping a delivery of feed and the locked position is registered by the microswitch.
14. Cable connecting probe to control circuitry.
15. Shot bolt of solenoid.
16. Central conductor of probe.
17. Sheath of probe to reserve electrical isolation from frame. Probe works by the circuitry detecting conduction of very low voltage potential through feed to metal trough and framework, also linked to control circuitry and earthed for safety.
18. Base cap of dispensing mechanism baton. When in the dropped position it plugs the hopper to prevent feed from flowing into volumetric chamber.
19. Base cone section of dispensing mechanism volumetric chamber. When the mechanism is raised, feed flows into the chamber created between the base cone, the hopper wall, and the base cap. When the mechanism is dropped the base cone moves away from the base hole of the hopper and the feed is allowed to drop down the feed delivery tube in an even circular dispersal.
20. Division bar to prevent animals walking through the framework of the feeder.
21. Feeding mechanism, nudge bar central guide and actuation member.
22. Dispensing mechanism lower stop.
23. Nudge mechanism ring. This is ideally positioned so that the animal and in the preferred of a pig, can actuate it by its snout.
24. Nudge bar ring to nudge bar guide connection bar.
25. Spray nozzle located on the end of the water delivery tube.
26. Conical raised section of trough.
27. Pig.
28. Feeder foot for securing to ground and providing stability.
29. Dry particulate feed.
30. Liquid sprayed from nozzle in regular dispersal pattern on to base of trough.
31. Feed delivery tube. Protects spray nozzle from fouling by animal and acts as a guide for nudge mechanism.

The above described arrangement alleviates any requirement for expensive components and effects proportional mixing of dry particulate feed and liquid in a trough within the desired control parameters. A trough that has near 360-degree access is desirable so that pigs may eat together and gain access to the feeder from both sides.

The important part of the feeder relevant to the present invention is the feeding trough 32 and delivery means for supplying feed and liquid, typically water, thereto.

The feeder employs an arrangement whereby a trough, which is preferably round (but could be square or rectangular) and is raised conically or pyramidally towards the centre and may top out in a flat or pointed section, is positioned axially below a spray nozzle 25. A feed delivery tube 31 which could be square, rectangular or preferably round is situated around the same axis and positioned to prevent the pigs gaining access to the spray nozzle, to protect it from damage. A nudge bar 24 which is mechanically linked directly or indirectly to a switch and a dry particulate feed dispensing mechanism is located around the same axis, so that it is operable by an animal's head or snout from either side of the feeder's supporting framework. The nudge bar is fixed to the delivery tube which moves as part of the dispensing mechanism.

To operate the feeder the animal nudges the nudge bar which operates the switch and the mechanism directly or indirectly to effect a controlled release of dry particulate food down the feed delivery tube or orifice. At the same time, or after a controlled time delay, a measure of liquid is sprayed on to the raised, inclined central section of the trough so that the feed is instantly mixed with the liquid and flushed down into the surrounding annular section of the trough. The feed and the liquid are delivered to the trough in a predetermined regular dispersal pattern so that the liquid can be effectively applied to a wider surface area of the feed than if the feed were deposited in a heaped drop.

A probe 17 terminates in the bowl of the trough and is supported by the supporting framework or by the trough itself to detect when the mixed feed reaches a maximum preferred level. The probe signal can be used by the control unit to shut down or lock out the feed and liquid dispensing mechanisms.

The above-described feeder readily enables pigs to be fed according to an optimal feeding programme. Thus, when newly weaned animals, especially piglets, are offered feed, it is desirable to feed them on a little and often basis to replicate the feeding regime that was naturally offered by the mother. This means that the animal consumes small amounts of feed throughout the day, for example every hour. It has been discovered this is the best way to feed newly weaned piglets to prevent them gorging on feed and causing digestive upsets. However, it is important from a commercial perspective to ensure that the piglets consume sufficient feed to meet their appetite so that they can fulfil their growth potential. It is therefore not desirable to ration the quantity of feed available at any one time, as many other feed systems do based on a predetermined feed plan.

The feeding system enabled by the above described pig feeder allows piglets to demand from the feeding device, by means of an animal operable mechanism and switch, as much freshly mixed feed (dry feed and water) as they require to satisfy their appetite during a regulated feed time period of each feed cycle. During the remainder of the feed cycle the feed system is locked out or shut down to ensure time for the feed that they have just consumed to be digested.

While the feeder is operational the freshly mixed feed is presented in a bowl that is equipped with a probe to sense when the feed reaches a maximum level. To prevent wastage through spillage or through excess feed going rancid over time, the control device detects the feed level and overrides the feeding cycle control to shut down or lock out the mixing mechanism while the feed remains at a high level.

As the piglets grow and their digestive competence improves, it is possible to extend the "feed time" regulated in each feeding cycle in increments until there is no longer a "down time" during which the feeder is shut down and does not mix feed. The availability of feed constantly is thus referred to as adlibitum feeding. A feeder is thus conceived also suitable for bigger and more developed pigs, which uses the features of the above described feeder but does not require the feed cycle control as it functions on an adlibitum basis.

A most important feature of the above described feeder is that it offers the pigs a freshly mixed feed, as compared to known feeders which mix the dry feed and water at an elevated region of the feeder, and that the measured doses of dry feed and liquid are relatively adjustable, so that proportional amounts of feed to liquid can be varied from 1 to 1 for newly weaned pigs, up to 1 to 4 for older pigs being fed on an adlibitum basis and destined to be fed on a centralised wet feed system during their finishing period.

The freshness of the mix is necessarily achieved because the dry feed and liquid are not mixed until they are delivered to the inclined surface of the raised central region of the trough, from which the mixture immediately migrates under gravity into the feeding region. The delivery of the dry feed and liquid in a predetermined dispersal pattern, such as a ring, is important in this respect. Thus, the water is not poured onto the dry feed on the inclined surface, but is sprayed thereon, for example in a ring shaped pattern in the case of a conical raised region of the trough, or in a generally square or rectangular pattern if the inclined surfaces are the faces of a pyramid. This also ensures that approximately even amounts of mixed feed are flushed down all around the trough, which may be segmented to allow one pig to feed at each segment.

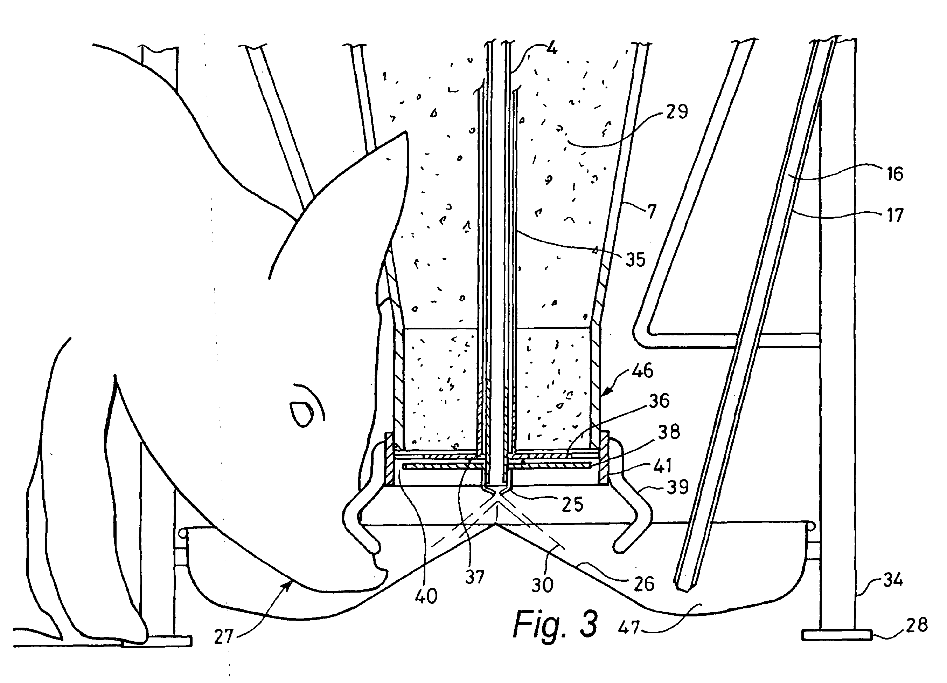

An alternative arrangement is shown in Figs 3 - 9.

Referring to Fig 3 the numerically identified parts are described as follows:-
4. Water delivery tube.
7. Hopper for dry, particulate feed.
16. Central conductor or probe.
17. Sheath of probe to preserve electrical isolation from the frame. Probe works by the circuitry detecting conduction of very low voltage potential through feed to metal trough and framework, also linked to control circuitry and earthed for safety.
25. Spray nozzle located on the end of the water delivery tube.
26. Conical raised central region of trough.
27. Pig.
28. Feeder foot for securing to ground and providing stability.
29. Dry particulate feed.
30. Liquid sprayed from nozzle in regular dispersion pattern onto base of trough.
34. Framework leg to support hopper and mechanism.
35. Link tube which connects element 36 of dispensing mechanism to rotation sensor and lock mechanism.
36. Dispensing wheel which rotates with element 41, the dispensing ring, when the nudge finger 39 is operated by the pig. The rotation allows feed to fall through the holes in the periphery of the wheel onto the dispensing plate 38 and pushes it out to the feed delivery gap 40 where it falls in a uniform pattern into the trough.
37. Dispensing wheel spacer provided bearing for rotation of dispensing wheel.
38. Dispensing wheel plate carried by water delivery tube to suspend dispensing mechanism.
39. Nudge finger.
40. Feed dispensing gap.
41. Nudge ring, which rotates around base of hopper 7.

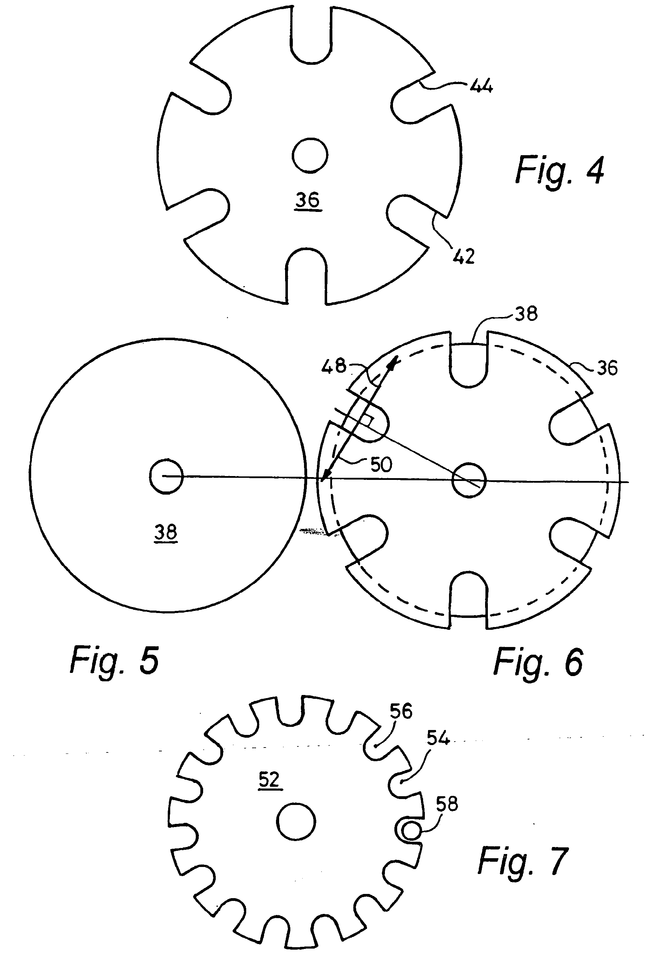

Figs 4 and 5 show items 36 and 38 respectively. Disc 38 is stationary - being fixed to the water tube 4. The larger disc 36 having the cut away notches 42, 44, etc., is rotatable by a pig nudging any one of the nudge bars 39 in a sideways manner - unless the link tube 35 has been locked to prevent rotation (as will be described later).

The diameter of the notched disc 38 is substantially the same as the internal diameter of the cylindrical lower end 46 (in Fig 3) of the hopper 7. The wall thickness of the hopper is significant, so that there is an annular gap 40 around disc 38 through which dry feed from hopper 7 can fall. However, since the wall thickness of the hopper end 46 is commensurate with the radial width of the gap, there is little tendency for any of the dry feed to migrate through the annular gap 40 while the notched plate 36 remains stationary.

On the other hand, if dry feed is resting on stationary disc 38 (having dropped through the notches 42, 44 etc., in 36), and disc 36 is angularly displaced, the feed on the disc 38 will be moved in a generally tangential manner (see arrows 48 and 50 in Fig 6) and will be pushed off the disc 38 to fall through the annular gap 40.

By selecting the diameter of the hopper 46 and disc 38, so the dry feed will pass in a circular ring-like pattern onto the conical raised region 26 of the trough.

One notched disc 36 is secured (as by welding) to the ring 42, or may be formed integrally therewith as by casting and then machining.

Rotation of the nudge ring 41 relative to the lower cylindrical end 46 of the hopper 7 is therefore transmitted to the notched disc 36 and therefore to the link tube 35. Rotation of the latter allows water to flow into tube 4 (or be released therefrom) to enter and pass through spray nozzle 25 in the form of a circular ring-like pattern onto the conical surface 26, at the same time as the dry feed, so that mixing is immediate and occurs as the feed and water migrate down the sloping surface of the conical section 26, into the trough 47.

Fig 7 shows a notched disc 52 which is intended to be linked for rotation with the notched disc 36. Disc 52 has a plurality of cut-outs 54, 56 etc., around its circumference. A pin 58 moved (e.g. by a solenoid) into engagement with one of the notches aligned with the pin, arrests further rotational movement of the disc 52. If linked to 36, this in turn inhibits rotational movement of the tube 35 and therefore the disc 36 and nudge ring 41.

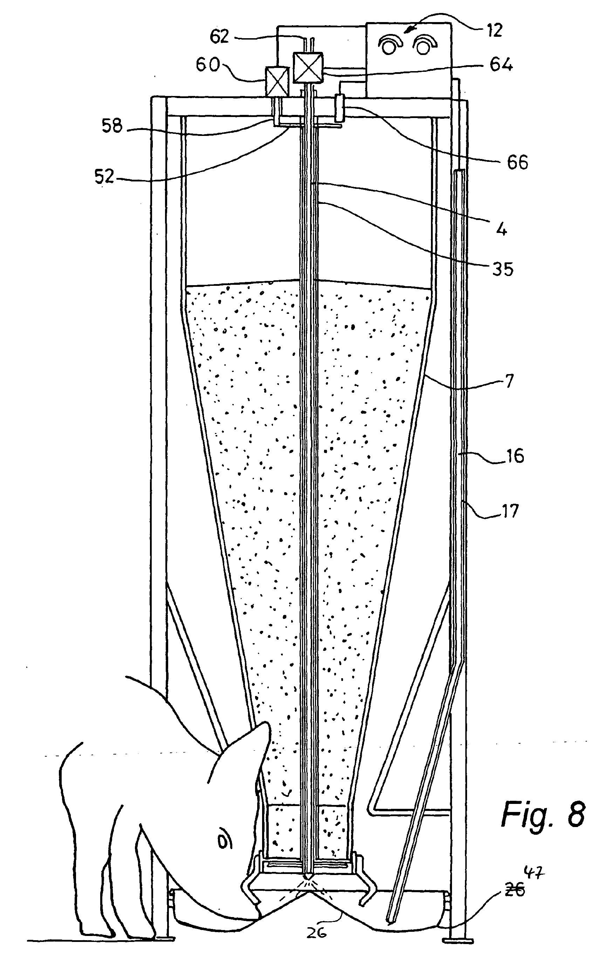

Fig 8 shows how the disc 52 can be mounted at the upper end of the tube 35. The pin 58 is shown protruding from a solenoid actuator 60, and a water feed pipe 52 is shown supplying water to the upper end of the tube 4 (which protrudes through the upper end of 35) via a solenoid operated valve 64.

A sensor 66 detects if there is any movement of the disc 52, and an electrical circuit (not shown) generates a current to operate the solenoid valve 64 to allow water to flow while the disc 52 is rotating.

If the apparatus is to be inhibited either because a sensor in the trough detects a build up of uneaten food in the trough, or by virtue of the passage of time (controlled by a timing means not shown), the solenoid actuator 60 is energised to force pin 58 into a notch in the disc 52 aligned therewith, to prevent further rotation of the disc 52 (and therefore disc 36) - thereby arresting further dispensing of feed and water.

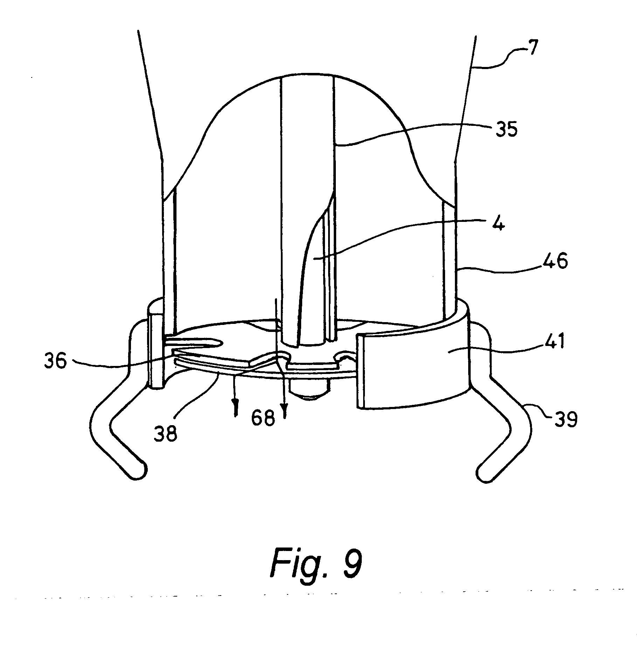

Fig 9 shows the tortuous path (by way of arrow 68) which has to be followed by the dry feed from the hopper, radially over the disc 38. Although not shown, with rotation of the disc 36, tangential movement of the dry feed on disc 38 also occurs, until it reaches the circumferential edge of disc 38 from which it falls through the annular gap 40 to be dispensed as dry feed with rotational movement of the notched disc 36.

It will be understood that continued rotation of the disc 36 will continuously expose fresh regions of the disc 38 to the dry feed in the hopper thereabove, and as dry feed is displaced tangentially into the gap 40, so it is replaced by dry feed from the hopper, whereby to effect a substantially continuos dispensing of dry feed particles through the gap, the volume of which will be governed by the extent to which the disc 36 is rotated by being nudged by a pig.

## Claims

1. A method of mixing metered amounts of liquid and dry feed whilst both migrate in a downward direction over a mixing region (26) to a feeding region (47) of a feeding trough, **characterised in that** the liquid and dry feed are both dispensed from above the mixing region simultaneously so as to fall onto the mixing region in a generally downward manner each in a similar predetermined dispersal pattern thereon.

2. A method as claimed in claim 1 wherein the dispersal pattern is a generally circular or square or rectangular outline.

3. A method as claimed in claim 1 or 2 wherein the delivery of feed and liquid is animal activated.

4. A method as claimed in claim 3 wherein the animal activation is inhibited at intervals so that the feeding cycle of the animals is controlled.

5. A livestock feeding trough having an inclined surface to receive dry feed and a liquid thereon by separate dry feed (19) and liquid (25) delivery means, the surface thereby serving as an inclined mixing platform (26) extending in a downward direction towards a feed reservoir (47) from which it can be eaten by the feeding livestock, **characterised** dry feed and liquid are separately but simultaneously deliverable from above onto the mixing platform (26), each in a similar predetermined dispersal pattern thereon.

6. A livestock feeding trough as claimed in claim 5 wherein the inclined surface is conical, or frusto-conical, and the reservoir is an annular channel around the base of the inclined surface.

7. A livestock feeding trough as claimed in claim 5 wherein the trough has a plurality of similarly inclined similar triangular or trapezoidal surfaces arranged symmetrically relative to a central axis, each extending downwardly and outwardly towards a trough.

8. A livestock feeding trough as claimed in claim 7 wherein the trough is formed by a corresponding plurality of interconnected segments each parallel to one of the inclined surfaces, and the segments interconnect with adjoining segments to form a continuous trough.

9. A livestock feeding trough as claimed in any of claims 5 to 8 wherein the pattern is in the form of a generally circular outline.

10. A livestock feeding trough as claimed in any of claims 5 to 9 wherein the delivery means is animal driven.

## Patentansprüche

1. Ein Verfahren zum Mischen abgemessener Mengen flüssigen und trockenen Futters während dessen Wanderung in einer Abwärtsrichtung über einem Mischgebiet (26) zu einem Futtergebiet (47) eines Futtertrogs, **dadurch gekennzeichnet, daß** sowohl das flüssige als auch das trockene Futter von oberhalb des Mischgebiets gleichzeitig abgegeben wird zum Fallen auf das Mischgebiet in einer allgemein nach unten gerichteten Weise jeweils in einem ähnlichen vorgegebenen Verteilungsschema.

2. Ein Verfahren wie in Anspruch 1 beansprucht, wobei das Verteilungsschema einen allgemein kreisförmigen oder quadratischen oder rechteckigen Umriß aufweist.

3. Ein Verfahren wie in Anspruch 1 oder 2 beansprucht, wobei die Abgabe des Futters und der Flüssigkeit durch die Tiere aktiviert wird.

4. Ein Verfahren wie in Anspruch 3 beansprucht, wobei die Aktivierung durch die Tiere in Abständen verhindert wird, so daß der Futterzyklus der Tiere gesteuert wird.

5. Ein Futtertrog für Vieh mit einer geneigten Oberfläche zur Aufnahme von trockenem Futter und einer Flüssigkeit durch getrennte Trockenfutter- (19) und Flüssigkeits-(25) Zufuhrmittel, wodurch die Oberfläche als eine in einer Abwärtsrichtung in Richtung auf einen Futtersammelbehälter (47) verlaufende geneigte Mischplattform (26) dient, wobei das Vieh aus dem Futtervorratsbehälter (47) fressen kann, **dadurch gekennzeichnet, daß** Trockenfutter und Flüssigkeit getrennt aber gleichzeitig von oben auf die Mischplattform (26) zuführbar sind, jeweils in einem ähnlichen vorgegebenen Verteilungsschema.

6. Ein Futtertrog für Vieh wie in Anspruch 5 beansprucht, wobei die geneigte Oberfläche konisch oder kegelstumpfförmig und der Sammelbehälter ein die Basis der geneigten Oberfläche umschließender ringförmiger Kanal ist.

7. Ein Futtertrog wie in Anspruch 5 beansprucht, wobei der Trog mehrere ähnlich geneigte, ähnliche dreieckige oder trapezförmige, gegenüber einer zentralen Achse symmetrisch angeordnete Oberflächen aufweist und jede in Richtung auf einen Trog abwärts und nach außen verläuft.

8. Ein Futtertrog wie in Anspruch 7 beansprucht, wobei der Trog durch eine entsprechende Vielzahl aus miteinander verbundenen und jeweils zu einer der geneigten Oberflächen parallelen Segmenten besteht und die Segmente unter Ausbildung eines kontinuierlichen Troges mit benachbarten Segmenten verbunden sind.

9. Ein Futtertrog wie in irgendeinem der Ansprüche 5 bis 8 beansprucht, wobei das Schema in der Form einer allgemein kreisförmigen Linie vorliegt.

10. Ein Futtertrog nach irgendeinem der Ansprüche 5 bis 9, wobei das Zuführungsmittel durch Tiere angetrieben wird.

## Revendications

1. Procédé de mélange de quantités mesurées de bouillie liquide et d'aliment sec tandis que les deux migrent dans une direction vers l'aval sur une région de mélange (26) vers une région d'alimentation (47) d'une mangeoire, **caractérisé en ce que** la bouillie liquide et l'aliment sec sont tous deux distribués depuis le dessus de la région de mélange simultanément de sorte qu'ils tombent sur la région de mélange d'une manière généralement vers l'aval chacun selon un schéma de dispersion prédéterminé similaire sur celle-ci.

2. Procédé tel que revendiqué à la revendication 1, dans lequel le schéma de dispersion présente généralement un tracé circulaire ou carré ou rectangulaire.

3. Procédé tel que revendiqué à la revendication 1 ou à la revendication 2, dans lequel la livraison d'aliment sec et de bouillie liquide est activée par l'animal.

4. Procédé tel que revendiqué à la revendication 3, dans lequel l'activation par l'animal est inhibée selon des intervalles, de sorte que le cycle d'alimentation des animaux est contrôlé.

5. Mangeoire pour bétail présentant une surface inclinée pour y recevoir un aliment sec et de la bouillie liquide grâce à un moyen de livraison de l'aliment sec (19) et un moyen de livraison de la bouillie liquide (25) séparés, la surface de la mangeoire servant de plateforme de mélange inclinée (26) s'étendant dans une direction vers l'aval vers un réservoir d'aliment (47) depuis lequel il peut être mangé par le bétail se nourrissant, **caractérisé en ce que** l'aliment sec et la bouillie liquide sont livrables séparément mais simultanément depuis le dessus sur la plateforme de mélange (26), chacun selon un schéma de dispersion prédéterminé similaire sur celle-ci.

6. Mangeoire pour bétail telle que revendiquée à la revendication 5, dans laquelle la surface inclinée est conique, ou frusto-conique, et le réservoir est un canal annulaire autour de la base de la surface inclinée.

7. Mangeoire pour bétail telle que revendiquée à la revendication 5, dans laquelle la mangeoire présente une pluralité de surfaces triangulaires ou trapézoïdales similaires inclinées similairement agencées de manière symétrique par rapport à un axe central, chacune s'étendant vers l'aval et vers l'extérieur en direction d'une mangeoire.

8. Mangeoire pour bétail telle que revendiquée à la revendication 7, dans laquelle la mangeoire est formée par une pluralité correspondante de segments interconnectés chacun parallèle à l'une des surfaces inclinées, et les segments s'interconnectent avec des segments adjacents pour former une mangeoire continue.

9. Mangeoire pour bétail telle que revendiquée selon l'une quelconque des revendications 5 à 8, dans laquelle le schéma est dans la forme d'un tracé généralement circulaire.

10. Mangeoire pour bétail telle que revendiquée selon l'une quelconque des revendications 5 à 9, dans laquelle les moyens de livraison sont entraînés par l'animal.
